# EUROPEAN PATENT APPLICATION

(11) **EP 2 320 671 A1**
(43) Date of publication of application: **11.05.2011**
(21) Application number: 10014152.2
(22) Date of filing: 29.10.2010
(51) Int. Cl.: H04N 21/845, H04H 60/37

(54) **Providing parts of contents for network display device**

(30) Priority: 04.11.2009 KR 20090106165
(71) Applicant: LG ELECTRONICS INC., Yeongdeungpo-gu Seoul 150-721 (KR)
(72) Inventor: Woo, Nayoung, Gyeonggi-do 451-713 (KR)
(74) Representative: Katérle, Axel

(57) **Abstract**

Provided is a method which allows users to access a content provider server, select only a part of content and download or stream the selected part of content, over a network.

## Description

### CROSS-REFERENCE TO RELATED APPLICATIONS

The present application claims the benefit of priority under 35 U.S.C. 119 to Korean Patent Application No. 10-2009-0106165 filed on November 04, 2009 which is hereby incorporated by reference in its entirety.

### BACKGROUND

The present disclosure relates to a method of providing a part of content over network, and more particularly, to a method, which allows users to access a content provider server, select only a part of content and download or stream the selected part of content, over a network.

As a digital-based digital television (TV) technology is developed instead of analog broadcasting and is practically applied, various kinds of content services such as real-time broadcasting, Contents On Demand (COD), games and news may be provided to users by using the Internet network connected to each home besides broadcasting medium.

As an example of providing the content services over the Internet network, there are Internet Protocol TVs (IPTVs). The IPTVs transmit all kinds of information services, video contents and broadcasting to provide them to users' TVs over the high-speed Internet network.

As a type of TV that has been further advanced by one stage than the IPTVs, recently, concepts such as broadband TVs, web TVs and smart TVs have been proposed. In such TVs, a plurality of content providers exist unlike the IPTVs, and users may individually access the plurality of content provider to receive contents, which are provided from the content providers, such as various Video On Demand (VOD), games and video telephone services.

Users should download selected contents for viewing desired contents, and even when the users desire to view only a portion of videos, they should access total videos. Therefore, the users should pay undesired costs for payment contents, much time is taken for downloading, and there is inefficiency because it is impossible to view only a necessary part.

### SUMMARY

Embodiments provide a method, which can segment one content and provide only a part of the content to a user in a network TV system.

In one embodiment, a method of segmenting and providing content in a display device accessible to a network includes: accessing a content provider server; receiving a content selection input from a user; receiving a selection input for a section of the selected content from the user; transmitting information of the selected section to the content provider server; and receiving data of the selected section from the content provider server.

In another embodiment, a method of segmenting and providing content in a server providing contents over a network includes: transmitting contents-related information to a user terminal; receiving content selection information from the user terminal; receiving selection for a section of the selected content from the user terminal; and transmitting data of the selected section to the user terminal.

In further another embodiment, a video signal processing apparatus accessible to a network includes: a user input unit receiving a content selection input from a user and a selection input for a section of the selected content; a network interface accessing a content provider server, and receiving content or data associated with the section of the content which is selected by the user; and a controller transmitting the content selection input and the selection input for a section of the content to the content provider server, receiving data of the section selected by the user to the content provider server, and displaying the data to the user.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

FIG. 1 is a block diagram illustrating a network of a network TV system according to an embodiment;

FIG. 2 is a block diagram illustrating a configuration of a network TV according to an embodiment;

FIGS. 3 and 4 are exemplary diagrams illustrating a use example of a remote controller for controlling the network TV of FIG. 2;

FIG. 5 is a block diagram illustrating an internal configuration of a user interface in a network TV of FIG. 1 and an internal configuration of a motion recognition remote controller in FIG. 3;

FIG. 6 is an exemplary diagram illustrating a main screen of a network TV according to an embodiment;

FIG. 7 is an exemplary diagram illustrating an initial screen of a content provider server according to an embodiment;

FIG. 8 is an exemplary diagram illustrating a purchase option menu according to an embodiment;

FIG. 9 is an exemplary diagram illustrating a method where a user sets a section to access among one content, according to an embodiment;

FIGS. 10 and 11 are exemplary diagrams illustrating a method of selecting a section of content while replaying content, according to an embodiment; and

FIG. 12 is a flowchart illustrating a method of segmenting and providing content according to an embodiment.

### DETAILED DESCRIPTION OF THE EMBODIMENTS

Reference will now be made in detail to the preferred embodiments of the present invention, examples of which are illustrated in the accompanying drawings. Wherever possible, the same reference numbers will be used throughout the drawings to refer to the same or like parts.

Hereinafter, the image sensor and a method for manufacturing the same according to the present invention will be described with reference to the accompanying drawings in detail.

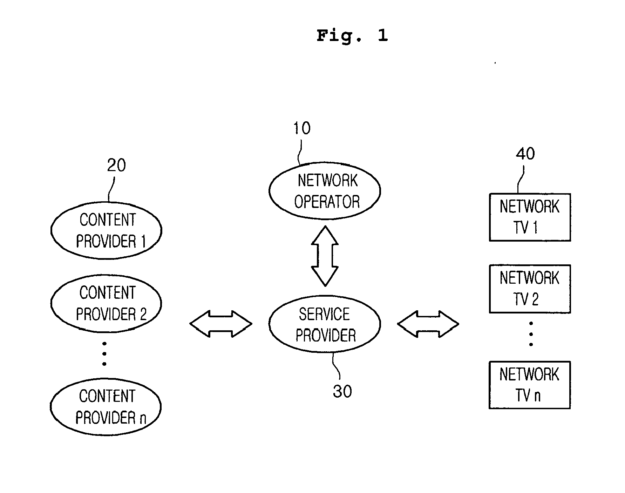

FIG. 1 is a block diagram illustrating a network of a network TV system according to an embodiment.

Referring to FIG. 1, a network TV system according to an embodiment includes a network operator server 10, at least one Content Provider (CP) server 20, a service provider 30, and at least one network TV 40.

The network operator server 10 provides base software necessary for normally operating contents, which are provided from the content provider server 20 to the network TV 40, in the network TV 40. Also, the network operator server 10 may provide the hardware information of the network TV 40 necessary for normally executing contents in the network TV 40, to the content provider server 20.

For example, the network operator server 10 provides a main screen configured when contents provided by content providers are displayed on the network TV 40, and when a user selects content or inputs various commands, the network operator server 10 provides a user interface for displaying an output based on the selected content or the commands. Also, the user interface provides information for updating the firmware or software of the network TV 40 whenever necessary. The network operator server 10 may be the same main agent as the manufacturer of the network TV 40.

The content provider server 20 creates various contents, which may be provided on a network, to configure the contents into a format capable of replay in the network TV 40, and provides the contents according to the request of the network TV 40. The contents may be arbitrary data that may be serviced over the network.

The service provider 30 may be an Internet service provider that provides network communication between the network operator server 10, the content provider server 20 and the network TV 40. The network may include an arbitrary wired/wireless Internet network using an Internet protocol. Particularly, the service provider 30 transmits contents provided by the content provider server 20 to the network TV 40, performs the maintenance and management of a transmission network in order for a user to stably receive the contents, and provides base facilities for transmission of the contents to the content provider server 20.

The network TV 40 receives contents through the service provider 30 to replay or execute the contents in response to a user's command. The network TV 40 includes broadcasting reception devices such as a network set-top box, and a user terminal, being an arbitrary video signal processing device, on which a network interface and a phone for network are mounted.

More specifically, the content provider server 20 may a provider that creates all kinds of contents to be provided to the network TV 40. The content provider server 20 may include a TV broadcasting station, a radio broadcasting station, a VOD provider, an Audio On Demand (AOD) provider, a game provider, a picture phone service provider, a weather information provider and a photograph-related service provider.

The service provider 30 serves as a medium that transmits the data and command of the network operator server 10, the data and command of the content provider server 20 and the data and command of the network TV 40. The service provider 30 may be a common wired/wireless Internet service provider. The service provider 30 provides communication network hardware in order for the network operator serve 10, content provider server 20 and network TV 40 to smoothly communicate with each other, and simultaneously provides various communication services such as IP address assignment and bandwidth control. The function of the service provider 30 has been well known, and thus its more detailed description will be omitted.

The network TV 40, as described above, includes broadcasting reception devices such as a network set-top box on which an Internet communication module is mounted, and arbitrary devices such as a network phone.

The network TV 40 fundamentally has a network interface accessible to a network. The network TV 40 receives the assignment of an IP address, and receives a data packet over a network to process the data packet. When the data packet is multimedia data such as video and audio, the network TV 40 may store or replay the multimedia data.

The network TV 40 may transmit a user's requirements while processing multimedia data through bi-directional communication. Also, buttons for controlling the network TV 40, i.e., buttons for selecting various menus may provide to a remote controller for controlling the network TV 40 in order for the network TV 40 to well use services.

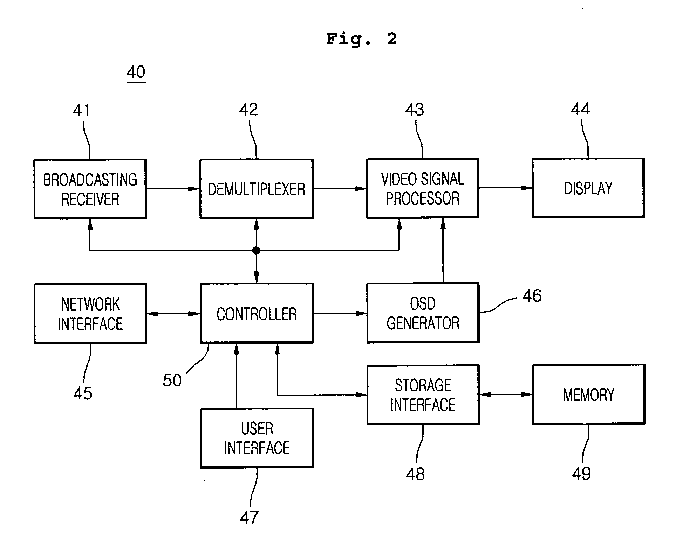

Hereinafter, the above-described configuration and operation of the network TV 40 will be described in detail. FIG. 2 is a block diagram illustrating a configuration of the network TV 40 according to an embodiment.

The network TV 40 may additionally have a function that receives a broadcasting signal being a Radio Frequency (RF) signal wirelessly or through a cable with a broadcasting receiver 41, besides a function of receiving contents over a network.

The network TV 40 according to an embodiment, as described above, includes the broadcasting receiver 41, a demultiplexer 42, a video signal processor 43, a display 44, a network interface 45, an On Screen Display (OSD) generator 46, an user interface 47, a storage interface 48, a memory 49, and a controller 50.

Among such elements, the broadcasting receiver 41, the demultiplexer 42 and the video signal processor 43 may configure one broadcasting processor that receives a broadcasting signal and changes the broadcasting signal to a signal capable of being outputted to the display 44 through various processing.

When contents are digital broadcasting, a digital broadcasting signal is transmitted as a packetized transport stream into which a video signal, an audio signal and additional data are time-division multiplexed.

The broadcasting receiver 41 may include an antenna receiving a broadcasting signal that is transmitted from the outside. Also, the broadcasting receiver 41 may include a tuner that tunes a broadcasting signal having a frequency band corresponding to a tuning control signal according to the tuning control signal of the controller 50 that will be described below, and a demodulator that outputs the broadcasting signal of a tuned specific channel as a transport stream through a Vestigial Sideband (VS) demodulating operation and an error correcting operation.

Video data segmented through the demultiplexer 42 is processed by the video signal processor 43 and displayed on the display 44.

In this case, the video signal processor 43 includes an MPEG-2 decoder, and a scaler that changes the video data to be suitable for a vertical frequency, a resolution and a screen rate that accord with the output standard of the display 44.

Herein, the display 44 may selectively use various types of display devices such as Digital Light Processing (DLP), Liquid Crystal Display (LCD) and Plasma Display Panel (PDP).

Furthermore, an audio signal is processed by an audio signal processor (not shown) and outputted to a speaker, in which case the audio signal processor may include an AC-3 decoder.

Additional data included in additional data that is segmented through the demultiplexer 42 is stored in the memory 49 through the storage interface 48 that will be described below.

The memory 49 may be implemented with an Electrically Erasable Programmable Read-Only Memory (EEPROM).

As a means for receiving a requirement command from a user, the user interface 47 includes an infrared receiver that receives an infrared signal inputted through a remote controller, or a local key input unit disposed at the one side of a panel.

The network interface 45 receives contents or data from the content provider server 20 or the network operator server 10 over a network. That is, the network interface 45 receives contents, which are provided from a content provider over the network, such as broadcasting, a game, VOD and a broadcasting signal and information associated with the contents. Also, the network interface 45 receives the update information and update file of a firmware the network operator sever 10 provides through the network interface 45.

The OSD generator 46 generates a main screen for receiving a user's determination signal in an OSD type.

That is, the OSD generator 46 may display information related to contents, which are received through the network interface 45, through the display 44.

The controller 50 controls an overall operation based on a command that is inputted from the user interface 47.

The controller 50 receives the software (i.e., the update file of a firmware) of the content provider server 20 received from the network operator server 10.

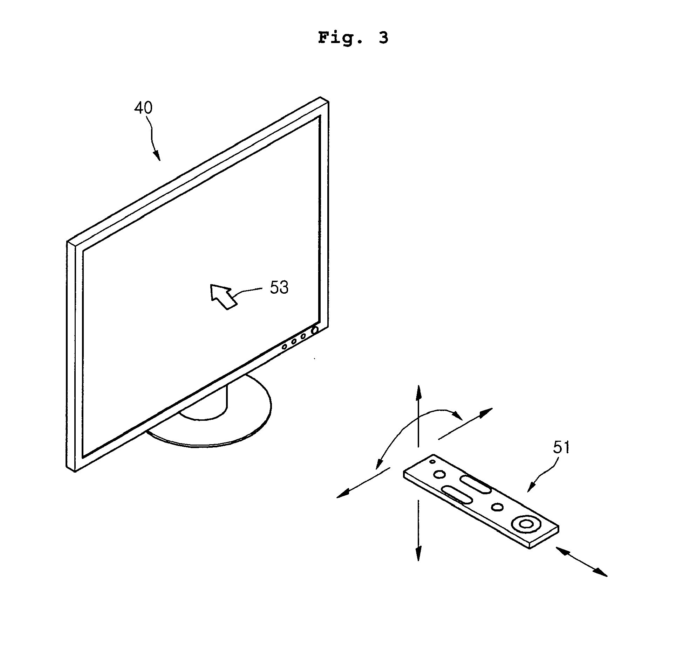

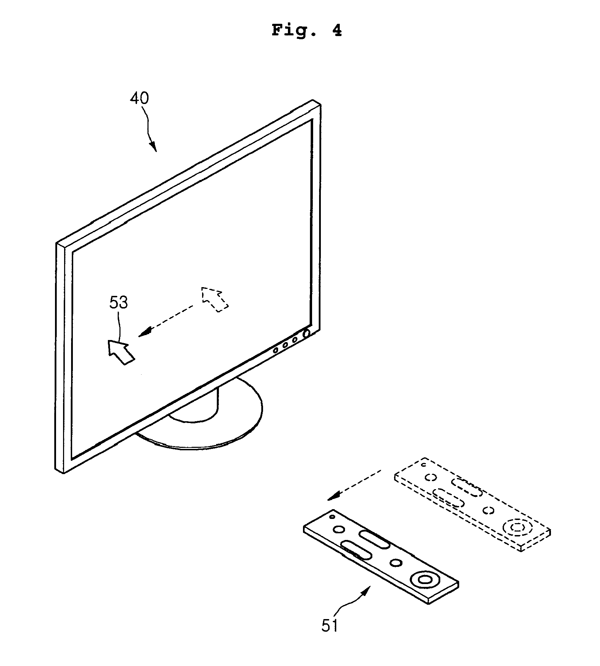

FIGS. 3 and 4 are exemplary diagrams illustrating a use example of a remote controller for controlling the network TV of FIG. 2.

A remote controller may transmit a control signal to the controller 50 through a wireless signal receiver of receiving wireless a signal such as an RF signal or an infrared signal, wherein the wireless signal receiver may be included in the user interface 47 of the network TV 40. The remote controller that will be described below with reference to FIGS. 3, 4 and 5 is one that reacts to a user's motion as well as the button input of the user, and it is referred to as a motion recognition remote controller 51.

In an embodiment, the motion recognition remote controller 51 may transmit/receive signals to/from the network TV 40 according to an RF communication protocol. As illustrated in FIG. 3, in the network TV 40, a pointer 53 may be displayed at a location the motion recognition remote controller 51 points.

The user may move the motion recognition remote controller 51 upward and downward, right and left, backward and forward or rotate the motion recognition remote controller 51. A pointer 53 displayed in the network TV 40 responds to the motion of the motion recognition remote controller 51. FIG. 4 illustrates a bar where a pointer displayed in the network TV 40 moves in response to the motion of the motion recognition remote controller 51.

As illustrated in FIG. 3, when the user moves the motion recognition remote controller 51 to the left, even a pointer displayed in the network TV 40 moves to the left in response to the motion of the motion recognition remote controller 51. In an embodiment, the motion recognition remote controller 51 may include a sensor for determining a motion. The motion Information of the motion recognition remote controller 51 sensed by the sensor is transmitted to the network TV 40. The network TV 40 determines the motion of the motion recognition remote controller 51 on the basis of the motion information of the motion recognition remote controller 51, and calculates the coordinate values of the pointer 53 corresponding to the motion.

An acceleration sensor, a Gyro sensor or a geomagnetic sensor may be used as a sensor for determining a motion.

FIGS. 3 and 4 illustrate examples in which the pointer 53 displayed in the display 49 moves in response to the vertical motion, horizontal motion or rotation of the motion recognition remote controller 51. The moving speed or moving direction of the pointer 53 may correspond to the moving speed or moving direction of the motion recognition remote controller 51.

In an embodiment, setting is made in order for a pointer displayed in the network TV 40 to move in response to the motion of the motion recognition remote controller 51. As another example, a configuration is made in order for a certain command to be inputted to the network TV 40 in response to the motion of the motion recognition remote controller 51. That is, when the motion recognition remote controller 51 moves backward and forward, the size of an image displayed in the network TV 40 may be magnified or reduced.

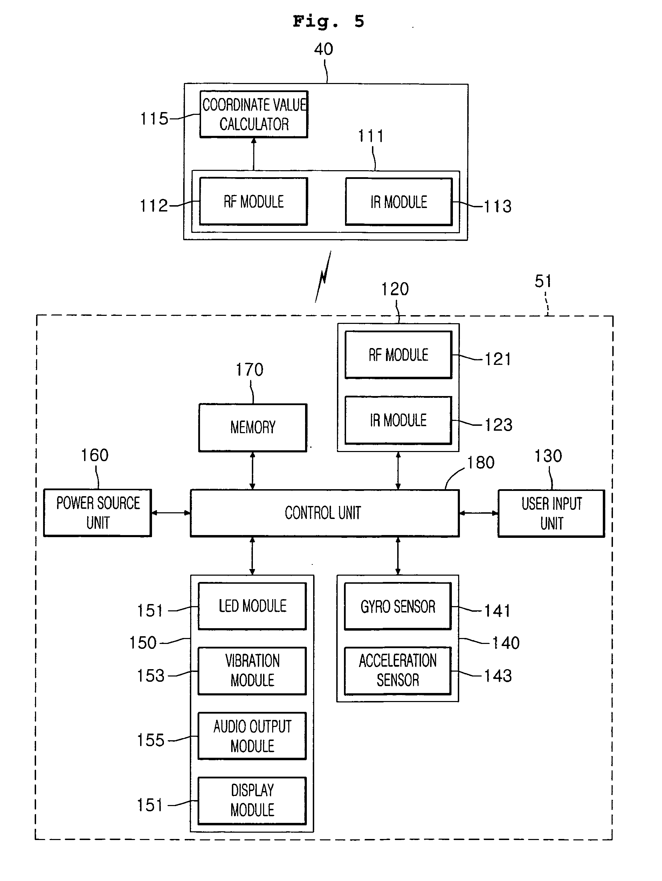

FIG. 5 is a block diagram illustrating an internal configuration of the user interface 47 in the network TV 40 of FIG. 1 and an internal configuration of the motion recognition remote controller 51 in FIG. 3.

Referring to FIG. 5, the network TV 40 may include a coordinate value calculator 115, and a wireless communicator 111. The coordinate value calculator 115 may be included in the controller 50. The wireless communicator 111 may be included in the user interface 47. The wireless communicator 111 may include an RF module 112 or an infrared (IR) module 113.

The motion recognition remote controller 51 may include a wireless communication unit 120, a user input unit 130, a sensor unit 140, an output unit 150, a power source unit 160, a memory 170, and a control unit 180.

The wireless communication unit 120 transmits/receives signals to/from the network TV 40. In an embodiment, the motion recognition remote controller 51 may include an RF module 121 that transmits/receives signals to/from the user interface 47 of the network TV 40 according to an RF communication protocol. Also, the motion recognition remote controller 51 may include an IR module 123 that transmits/receives signals to/from the user interface 47 of the network TV 40 according to an IR communication protocol.

In an embodiment, the motion recognition remote controller 51 transmits a signal including the motion information of the motion recognition remote controller 51 to the network TV 40 through the RF module 121. Also, the motion recognition remote controller 51 may receive a signal transmitted from the network TV 40 through the RF module 121. Moreover, the motion recognition remote controller 51 may transmit commands such as turn-on/off of a power source, channel switch and volume change to the network TV 40 through the IR module 123, depending on the case.

The user input unit 130 may include a keypad or buttons. A user may input a command related to the network TV 40 with the motion recognition remote controller 51 by manipulating the user input unit 130. When the user input unit 130 includes a hard key button, the user may input the command related to the network TV 40 with the motion recognition remote controller 51 by pushing the hard key button. When the user input unit 130 includes a touch screen, the user may input the command related to the network TV 40 with the motion recognition remote controller 51 by touching the soft key of the touch screen. Also, the user input unit 130 may include various kinds of input means such as scroll key and a jog key for the user manipulating, but an embodiment is not limited thereto.

The sensor unit 140 may include a Gyro sensor 141 or an acceleration sensor 143 as a motion sensor. The Gyro sensor 141 may detect the motion of the motion recognition remote controller 51. As an example, the Gyro sensor 141 may sense the motion information of the motion recognition remote controller 51 with respect to x, y and z axes. The acceleration sensor 141 may sense information of the moving speed of the motion recognition remote controller 51. The output unit 150 may output a video signal or an audio signal corresponding to the manipulation of the user input unit 130 or a signal transmitted by the network TV 40. The user may recognize the manipulation of the user input unit 130 or the control of the network TV 40 through the output unit 150.

As an example, the output unit 151 may include a Light Emitting Diode (LED) module 151, a vibration module 153, an audio output module 155, and a display module 157. Herein, when the user input unit 130 is manipulated or a signal is transmitted/received to/from the network TV 40 through the wireless communication unit 120, the LED module 151 emits light, the vibration module 153 vibrates, the audio output module 155 outputs audio, and the display module 157 outputs a video.

The power source unit 160 supplies a power source to the motion recognition remote controller 51. The power source unit 160 stops the supply of the power source when the motion recognition remote controller 51 does not move for a certain time, thereby reducing the waste of the power source. The power source unit 160 may again start the supply of the power source when a specific key included in the motion recognition remote controller 51 is manipulated.

The memory 170 may store various kinds of application data necessary for the control and operation of the motion recognition remote controller 51. When the motion recognition remote controller 51 wirelessly transmits/receives signals to/from the network TV 40 through the RF module 121, the motion recognition remote controller 51 and the network TV 40 transmits/receives a signal over a certain frequency band. The control unit 180 of the motion recognition remote controller 51 may store the information of a frequency band, over which the control unit 180 may wirelessly transmits/receives signals to/from the network TV 40 paired with the motion recognition remote controller 51, in the memory 170 and reference the information.

The controller 180 controls functions associated with the control of the motion recognition remote controller 51. The controller 180 may transmit a signal corresponding to the manipulation of a specific key of the user input unit 130 or a signal corresponding to the operation of the motion recognition remote controller 51 sensed by the sensor unit 140 to the wireless communicator 111 of the network TV 40 through the wireless communication unit 120.

As described above, the network TV 40 may include the wireless communication unit 120 that wirelessly transmits/receives signals to/from the motion recognition remote controller 51, and the coordinate value calculator 115 that calculates the coordinate values of a pointer corresponding to the operation of the motion recognition remote controller 51.

The wireless communicator 111 may wirelessly transmit/receive a signal to/from the remote controller 51 through the RF module 112. Also, the motion recognition remote controller 51 receives a signal, which is transmitted from the motion recognition remote controller 51 according to an IR communication protocol, through the RF module 112.

The coordinate value calculator 115 may correct shaking of a hand or an error from a signal corresponding to the operation of the motion recognition remote controller 51 that is received through the wireless communicator 111 and calculate the coordinate values (x,y) of the pointer 53 to be displayed in the display 49.

Moreover, the transmission signal of the motion recognition remote controller 51 that is inputted to the network TV 40 through the user interface 47 is transmitted to the controller 50 of the network TV 40. The controller 47 may determine information on the operation and key manipulation of the motion recognition remote controller 51 on the basis of a signal transmitted by the motion recognition remote controller 51, and control the network TV 40 in response to the determined information.

Hereinafter, a method will be described which selectively download a part of one content in the network TV system according to an embodiment.

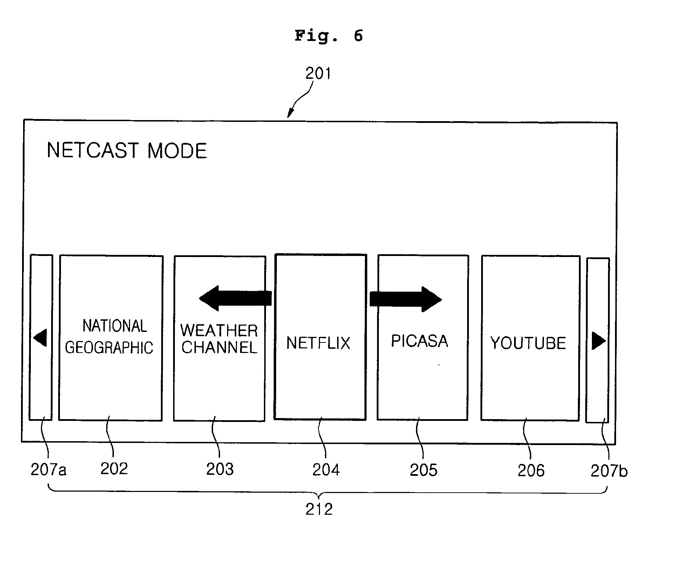

FIG. 6 is an exemplary diagram illustrating an initial screen or a main screen when selecting one of a plurality of content providers and executing an operation mode (hereinafter referred to as a NetCast mode) which provides a menu to be accessible, according to an embodiment. A main screen 201 may include a plurality of menu buttons 212 indicating content providers. A user may select one of the menu buttons 212 to access the server of each of the content providers and receive contents. The main menu merely is in accordance with an embodiment, and the network TV system according to an embodiment may be applied to an arbitrary type of network TV and content providing system that may access a content provider server to receive contents.

In the main screen 201, the user may select a desired content provider by using the direction key of the remote controller or the motion recognition remote controller 51. When there are many content providers, the user may view additional content providers with scroll buttons 207a and 207b.

In FIG. 6, as examples of content providers, the menu buttons of a National Geographic 202, a weather channel 203, a NetFlix 204, a Picasa 205 and a You-Tube 205 are displayed.

The National Geographic 202 is a content provider that provides contents associated with natural science. The weather channel 203 is a content provider that provides weather information. The NetFlix 204 provides movie-related contents. The Picasa 205 is a content provider that provides photograph-related contents. The You-Tube 206 is a content provider that provides VOD-related contents.

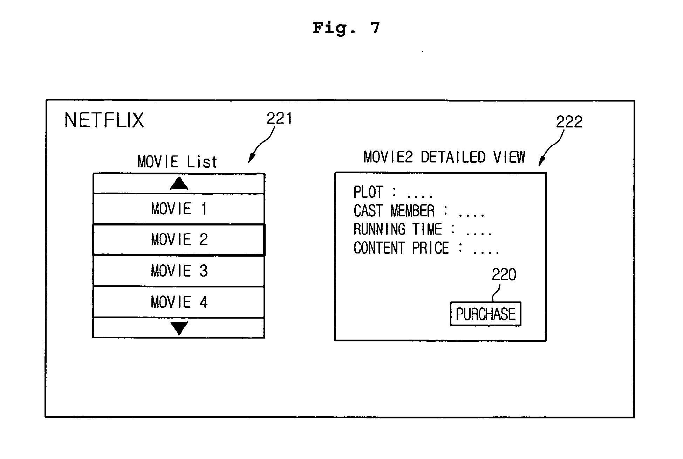

When the user selects and accesses the NetFlix 204 that provides movie contents, as illustrated in FIG. 7, the initial access screen of a NetFlix server is displayed.

Referring to FIG. 7, the initial screen of a movie content provider such as NetFlix includes a movie list 221 usable, and the user may move contents therebetween with the direction key of the remote controller or the motion recognition remote controller. The detailed information of content (for example, MOVIE2) selected by the user among the list 221 may be displayed on the other side of a screen. For example, information on the plot, cast member, running time and content price of the MOVIE2 selected by the user may be displayed. In the case of free content, information indicating free of charge may be included.

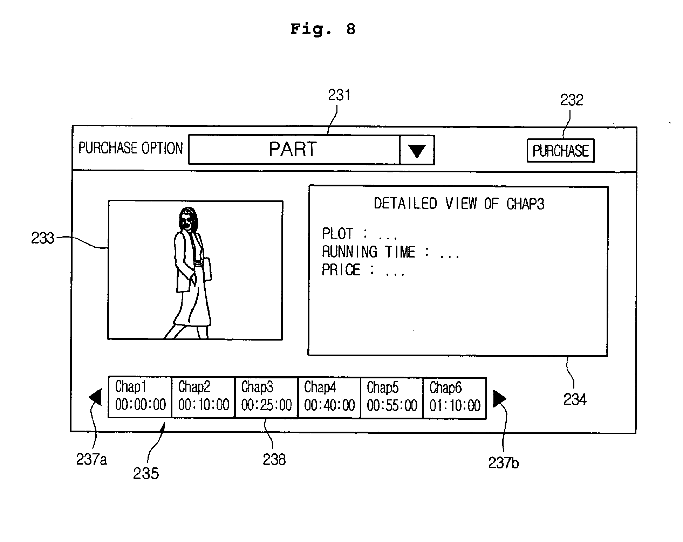

According to an embodiment, when the user decides the purchase of contents and selects the purchase button 220, as illustrated in FIG. 8, a purchase option button is displayed.

The user may select whether to purchase entire content or only a part of content through the purchase option menu. Also, the user may receive the detailed information of each part of the content.

As illustrated in FIG. 8, the user may select a part or entirety of content through a menu 231. Also, a preview screen 233 for selected content may be provided on the purchase option screen, and the section information 235 of entire content may be provided. The content section information 235 may include the partial names of contents, for example, chapters 1, 2, 3, ... and the start time or running time of each section. When section information cannot be displayed on one screen, the user may view other sections with the scroll bars 237a and 237b.

When the user selects one section 238 from the section information 235, the detailed information 234 of the selected section may be provided. The detailed information 234 of the section may include the plot content description, running time and/or price of a section to download. When content is not a movie, detailed information may be changed based on the feature of each content.

The user may receive the content of a section including a desired video on the basis of detailed information by sections.

According to embodiments, a user may select a plurality of sections to purchase contents.

According to an embodiment, contents provided by a content provider are edited in advance so that they may be segmented into sections and provided, and even information on each section may be provided independently of information of entire content.

Segmenting the sections of contents may be changed according to embodiments. Furthermore, the sections of contents may be segmented by certain time units, and they may be segmented by contents and provided.

In a state where the section 238 has been selected, by selecting the purchase button 232, the user may download or stream a corresponding section. The user may download an actual file and receive contents in a streaming type. In the case of payment contents, payment is performed, but in the case of free contents, download or streaming may be immediately performed.

According to embodiments, the user may select a plurality of sections of contents that may be segmented in plurality and purchased, and may purchase the contents.

For accessing a part of contents, as described above, a content provider server may segment and edit content in advance, but the user may set a section to access among the content.

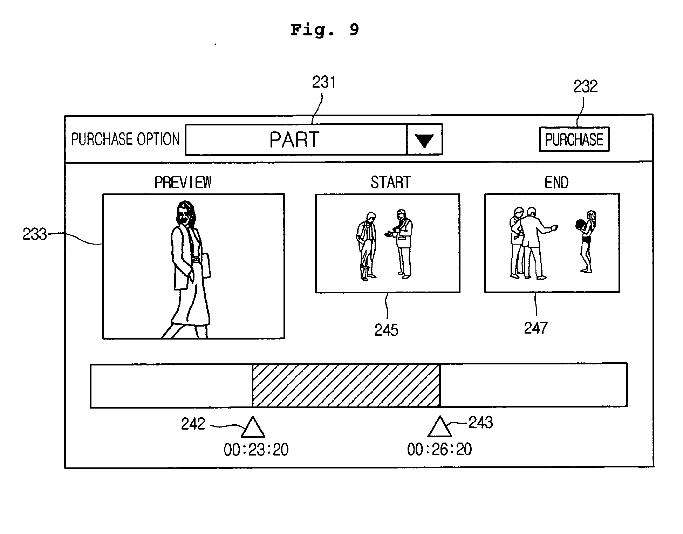

FIG. 9 is an exemplary diagram illustrating a method where a user sets a section to access among one content, according to an embodiment.

Referring to FIG. 9, when a user selects a purchase option 231 of content, a progressive bar 241 for the content may be displayed. The user may move arrows 242 and 243 of the progressive bar 241 with a remote controller to set a section for accessing. The arrow 242 indicates the start point of the section to access, and the arrow 243 indicates the end point of the section to access. According to an embodiment, a thumb nail 245 corresponding to a start point designated by the user and a thumb nail 247 corresponding to an end point designated by the user may be displayed. Also, the user may provide a preview 233 for the set section. When the user executes the preview 233, an image for a section that has been set in the preview 233 may be replayed.

The user may set a section to access through an interface having another type other than the progressive bar 241. For example, the user may input the start time and end time of a section to access.

The user sets a section, and when the user selects the purchase button 232, the selected section of content may be downloaded or received as streaming.

According to an embodiment, the user may set a section of content that is being replayed while replaying the content, and may download or stream the section.

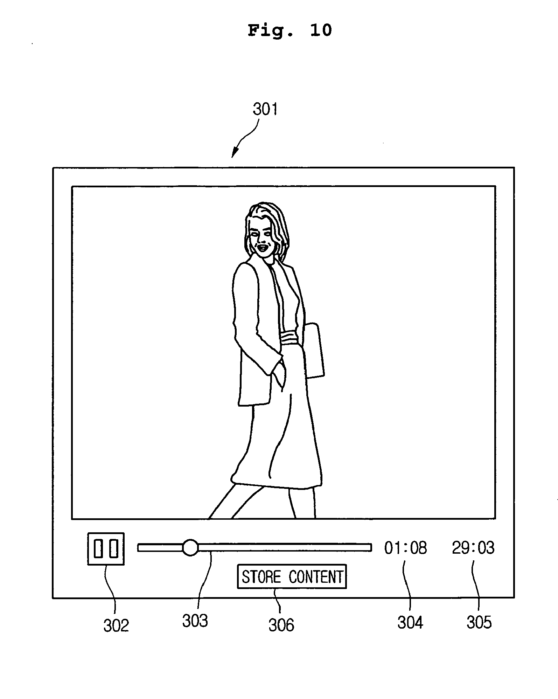

Referring to FIG. 10, it is assumed that content is being replayed through the network TV. Various function buttons, for example, a pause button 302, a progressive bar 303 and information (for example, elapse time 304 and remaining time 305).

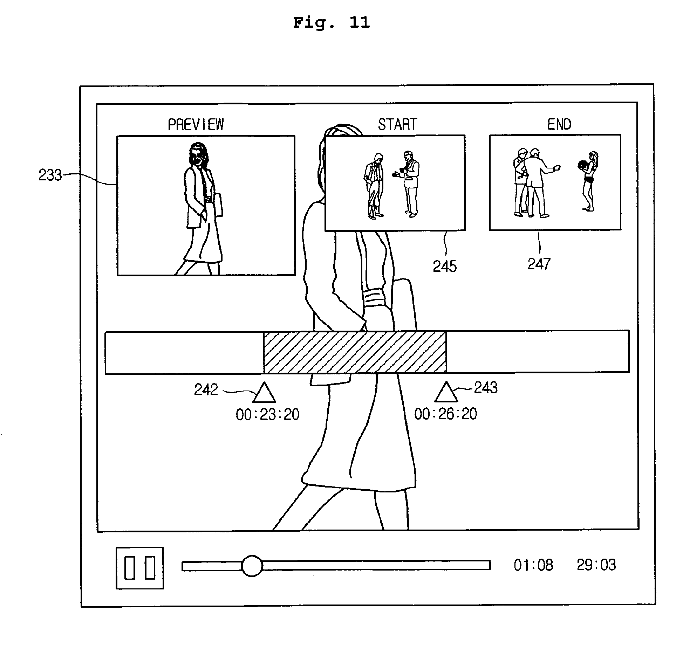

When the user selects a content storage button 306, as illustrated in FIG. 11, a section setting menu similar to FIG. 9 may be displayed. A replay screen 301 may be paused and thereby may not be displayed, and as illustrated in FIG. 11, it may be translucently displayed under a section designation screen.

When a section is designated through a menu of FIG. 11, and only the designated section may be downloaded or streamed.

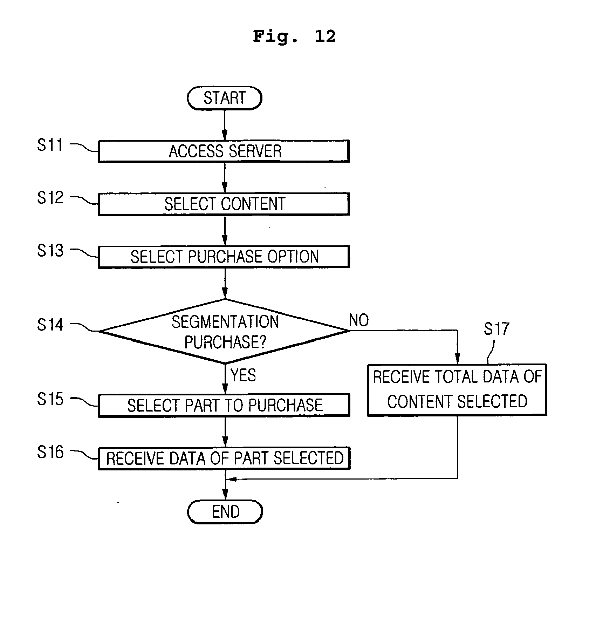

FIG. 12 is a flowchart illustrating a method of segmenting and providing content according to an embodiment.

Referring to FIG. 12, the network TV 40 accesses the content provider server 20 in operation S11, and a user may select one or more of contents the content provider server 20 provides in operation S12. The user selects a download option, i.e., whether to download entire content selected or only a part of the selected content in operation S13.

When the user selects a segmentation purchase option in operation S14, and the user may select a part to purchase in operation S15. At this point, as described above with reference to FIG. 8, a section to download may be edited beforehand in the content provider server 20 and provided, and the user may directly set a section through the menu in FIG. 9 or 11.

Data of a part or a section that is selected by the user in content is downloaded or received as streaming in operation S16.

When a purchase option selected by the user is not a segmentation purchase, the entirety of selected content is downloaded or received as streaming in operation S17.

According to an embodiment, performing of segmentation purchase may be set as a default. In this case, in FIG. 12, operations S13 and S14 where the user selects the purchase option may be omitted.

In the above-described embodiments, the network TV has been described above as an example, but an embodiment may be applied to a user terminal, being an arbitrary video processing device, which may access a network to receive and replay contents.

The network TV 40 may be implemented as a smart TV that may install various applications. By installing applications for performing the above-described functions or a set of computer commands in the smart TV, the functions may be performed in the smart TV. Applications or software for performing the above-described functions may include a plurality of modules for operating the controller of the network TV 40, and each of the modules may include computer-readable codes or commands. Moreover, the applications or software for performing the above-described functions may be stored in arbitrary storage mediums such as Hard Disk Drives (HDDs) and optical recording mediums.

According to embodiments, users can download a part of one content or receive streaming service for the part of the one content in the network TV system.

Although embodiments have been described with reference to a number of illustrative embodiments thereof, it should be understood that numerous other modifications and embodiments can be devised by those skilled in the art that will fall within the spirit and scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. A method of segmenting and providing content in a display device accessible to a network, the method comprising:
accessing a content provider server;
receiving a content selection input from a user;
receiving a selection input for a section of the selected content from the user;
transmitting information of the selected section to the content provider server; and
receiving data of the selected section from the content provider server.

2. The method according to claim 1, wherein the data of the selected section is received in a download scheme.

3. The method according to claim 1, wherein the data of the selected section is received in a streaming scheme.

4. The method according to claim 1, wherein the content is segmented into a plurality of sections and provided by the content provider server.

5. The method according to claim 1, further comprising: displaying a menu, which comprises at least one of segmentation information and preview of the content, to the user.

6. The method according to claim 1, further comprising: displaying a progressive bar for setting the sections to the user.

7. The method according to claim 6, further comprising: displaying at least one of a preview screen, start screen and end screen of the set section to the user.

8. A method of segmenting and providing content in a server providing contents over a network, the method comprising:
transmitting contents-related information to a user terminal;
receiving content selection information from the user terminal;
receiving selection for a section of the selected content from the user terminal; and
transmitting data of the selected section to the user terminal.

9. A video signal processing apparatus accessible to a network, comprising:
a user input unit receiving a content selection input from a user and a selection input for a section of the selected content;
a network interface accessing a content provider server, and receiving content or
data associated with the section of the content which is selected by the user; and
a controller transmitting the content selection input and the selection input for a section of the content to the content provider server, receiving data of the section selected by the user to the content provider server, and displaying the data to the user.

10. The video signal processing apparatus according to claim 13, wherein the data of the selected section is received in a download scheme.

11. The video signal processing apparatus according to claim 10, wherein the data of the selected section is received in a streaming scheme.

12. The video signal processing apparatus according to claim 10, wherein the content is segmented into a plurality of sections and provided by the content provider server.

13. The video signal processing apparatus according to claim 10, wherein the controller displays a menu, which comprises at least one of segmentation information and preview of the content, to the user.

14. The video signal processing apparatus according to claim 13, wherein the controller displays a progressive bar for setting the sections to the user.
